# EUROPÄISCHE PATENTSCHRIFT

(11) **EP 2 468 149 B1**
(45) Veröffentlichungstag und Bekanntmachung des Hinweises auf die Patenterteilung: **19.03.2014**
(21) Anmeldenummer: 11193446.9
(22) Anmeldetag: 14.12.2011
(51) Int. Cl.: A47J 27/04, F24C 15/00

(54) **Dampfbehandlungseinsatz, Gargerät und System mit Gargerät und Dampfbehandlungseinsatz**
Steam treatment insert, cooking device and system with cooking device and steam treatment insert
Insert de traitement à la vapeur, appareil de cuisson et système équipé d'un appareil de cuisson et d'un insert de traitement à la vapeur

(30) Priorität: 21.12.2010 DE 102010063716
(43) Veröffentlichungstag der Anmeldung: 27.06.2012
(73) Patentinhaber: BSH Bosch und Siemens Hausgeräte GmbH, 81739 München (DE)
(72) Erfinder: Bleier, Konrad, 76599 Weisenbach (DE); Brunner, Dieter, 76571 Gaggenau (DE); Henry, Karlheinz, 76547 Sinzheim (DE); Hintermayer, Manfred, 76185 Karlsruhe (DE); Strolz, Bernd, 76456 Kuppenheim (DE); Theine, Markus, 83355 Grabenstätt (DE); Wittrock, Frank, 69198 Schriesheim (DE)

(56) Entgegenhaltungen:
- DE-A1- 19 638 664
- DE-A1-102007 008 283
- US-A- 4 655 192

## Beschreibung

Die Erfindung betrifft einen Dampfbehandlungseinsatz für ein Gargerät, aufweisend ein Bodenteil und einen dampfdicht auf das Bodenteil aufsetzbaren Deckel sowie einen Dampfeinlassanschluss. Die Erfindung betrifft auch ein Gargerät, aufweisend einen Garraum, einen Dampferzeuger, mindestens einen mit dem Dampferzeuger verbundenen und von dem Garraum aus zugänglichen Dampfzufuhranschluss und eine Wrasenabzugseinrichtung. Die Erfindung betrifft ferner ein System mit einem solchen Gargerät und mit mindestens einem solchen Dampfbehandlungseinsatz.

DE 10 2005 046 011 A1 betrifft eine Vorrichtung zum Erwärmen und Garen von Speisen und Nahrungsmitteln, mit einem geschlossenen Behälter für das Gargut, der ein Boden-und ein Deckelteil aufweist, mit einer Vorrichtung zum Erzeugen von Dampf, mit einer Zuleitungsvorrichtung, mittels der der Dampf in den Gargutbehälter leitbar ist, und mit einer Trag- bzw. Befestigungsvorrichtung für ein oder mehrere Gargutbehälter. Dazu ist der Gargutbehälter an eine Zuleitung zum Einleiten des Dampfes und an einen Temperaturfühler anschließbar ausgebildet, wobei ein Temperaturfühler mit einer Steuerungseinrichtung in Verbindung steht, mittels der die Steuerung der Dampfzuleitung in den Gargutbehälter zur Durchführung des Gar- bzw. Erwärmungsprozesses durchgeführt wird. Ein besonderes Schüsselelement stellt dabei eine Kupplungsvorrichtung dar, welche es ermöglichen soll, alle funktional wesentlichen Bauelemente in den Gargutbehälter einzukuppeln. Dies geschieht beim Einschieben des Gargutbehälters in die Garvorrichtung. Der Gargutbehälter kann somit nach dem Befüllen mit den zu garenden Speisen direkt an unterschiedliche Dampfgarsysteme angeschlossen werden, ohne dass der Gargutbehälter noch mit separaten Luftzuführungsleitungen verbunden werden muss und ohne dass noch ein separater Temperaturfühler in den Gargutbehälter eingeführt werden muss. Die Gargutbehälter weisen dazu in ihrem rückseitigen Bereich eine Öffnung auf. Die Öffnung ist dabei im Deckelteil angeordnet. Beim Beschicken des Gerätes für den Garbetrieb werden die Gargutbehälter mit ihren Öffnungen an die Kupplungsvorrichtungen angeschlossen bzw. aufgesteckt. In der Kupplungsvorrichtung sind Zu- und Ableitungen für den Dampf sowie ein Temperaturfühler integriert angeordnet.

DE 10 2005 046 011 A1 beschreibt ferner, dass auch Dampfgargeräte in einer sehr einfachen Form auf den Markt gekommen seien, welche lediglich ein Sockelteil besitzen, in dem der Dampferzeuger und dessen Steuereinrichtung untergebracht ist. Die Garbehälter für das Gargut können dabei übereinandergestellt werden. Im Boden- und im Deckelteil besitzen sie Öffnungen für das Durchleiten des Dampfes. Der im Sockelbereich des Gerätes erzeugte Dampf wird von unten nach oben durch die Garbehälter geleitet, wobei im oberen Deckelbereich der überschüssige Dampf austreten kann.

Auch in der US4655192 wird ein Dampfbehandlungseinsatz beschrieben.

Es ist die Aufgabe der vorliegenden Erfindung, eine verbesserte Möglichkeit zum Behandeln von Gargut unter Dampf in einem Dampfbehandlungseinsatz bereitzustellen.

Diese Aufgabe wird gemäß den Merkmalen der unabhängigen Ansprüche gelöst. Bevorzugte Ausführungsformen sind insbesondere den abhängigen Ansprüchen entnehmbar.

Die Aufgabe wird gelöst durch einen Dampfbehandlungseinsatz wie in Anspruch 1 definiert für ein Gargerät, aufweisend ein Bodenteil und einen dampfdicht auf das Bodenteil aufsetzbaren Deckel sowie einen Dampfeinlassanschluss. Der Dampfbehandlungseinsatz weist ferner eine von dem Dampfeinlassanschluss beabstandete Dampfauslassöffnung auf. Durch die Beabstandung des Dampfeinlassanschlusses und der Dampfauslassöffnung kann auf eine besonders einfache Weise sichergestellt werden, dass der Dampfbehandlungseinsatz schnell und gleichmäßig mit durch den Dampfeinlassanschluss einströmendem Dampf füllbar ist, und zwar auch ohne eine spezielle Ausgestaltung des Innenraums des Dampfbehandlungseinsatzes zur Dampfverteilung. Die Dampfauslassöffnung ermöglicht ferner, beispielsweise im Gegensatz zu der US 4,655,192, einen definierten, insbesondere kontinuierlichen, Dampfauslass. Das Garverhalten unter Dampf entspricht dem eines dedizierten Dampfgargeräts.

Der Dampfeinlassanschluss ist zum mechanischen Anschluss an einem Dampfzufuhranschluss ausgestaltet. Der Dampfzufuhranschluss kann insbesondere mit einem Dampferzeuger verbunden sein.

Aus dem Dampfauslass austretender Dampf kann über eine übliche Abzugseinrichtung des Gargeräts, z.B. einen Wrasenabzug eines Backofens, abgeführt werden. Somit braucht das Gargerät selbst nicht dampfdicht ausgeführt zu sein.

Der Dampfbehandlungseinsatz kann als ein Einschubmodul zum Einschub in einen Garraum ausgebildet sein oder mag auf einem Träger, z.B. einem Backblech oder einem Gitterrost, ablegbar sein. Zu seiner Beschickung kann Gargut in das Bodenteil eingelegt werden und folgend der Deckel dampfdicht auf das Bodenteil aufgesetzt werden. Die Dampfdichtigkeit kann beispielsweise durch eine Dichtung, ein ausreichendes Gewicht des Deckels und/oder mindestens ein Verschlusselement erreicht werden.

Der Dampfbehandlungseinsatz mag unbeheizt sein und beispielsweise bei Bedarf durch das Gargerät beheizbar sein, z.B. durch eine Unterhitze eines Backofens, um eine Kondensation von Wasser in dem Dampfbehandlungseinsatz zu vermeiden. Der Dampfbehandlungseinsatz mag alternativ beheizbar sein und dazu mindestens eine Heizung (z.B. eine Flächenheizung oder eine Rohrheizung) sowie einen elektrischen Anschluss aufweisen.

Unter einem Anschluss kann insbesondere eine Konfiguration verstanden werden, welche dazu eingerichtet ist, mit einem Anschluss(gegen)stück verbunden zu werden, insbesondere dampfdicht.

Es ist eine Ausgestaltung, dass der Dampfeinlassanschluss und die Dampfauslassöffnung an gegenüberliegenden Seiten des Dampfbehandlungseinsatzes angeordnet sind. Dadurch werden eine besonders große Strecke zwischen ihnen und so eine besonders gleichmäßige Dampfbefüllung erreicht. Es ist eine Weiterbildung, dass der Dampfeinlassanschluss und die Dampfauslassöffnung an dem gleichen Teil vorhanden sind, nämlich an dem Boden oder an dem Deckel, was eine Reinigbarkeit erleichtert.

Es ist vorgesehen, dass die Dampfauslassöffnung eine Überdruckventilfunktion aufweist. Dadurch wird eine gleichmäßige Befüllung mit Dampf noch weiter erleichtert und insbesondere ein vollständig ungehindertes Ausströmen des Dampfs verhindert.

Zur Ermöglichung der Überdruckfunktion kann die Dampfauslassöffnung einen vorbestimmten Durchmesser aufweisen. Es ist eine Weiterbildung, dass die Dampfauslassöffnung ein Ventilelement aufweist. Es ist ferner eine Ausgestaltung, dass die Dampfauslassöffnung eine federnd gelagerte Andruckklappe aufweist. So kann ein gewünschter Überdruck auch unabhängig von einem Druck am Dampfeinlassanschluss eingehalten werden. Es ist ferner eine Ausgestaltung, dass die Dampfauslassöffnung eine federnd gelagerte Andruckklappe als dem Ventilelement aufweist. Die federnd gelagerte Andruckklappe ist zuverlässig und preiswert als auch leicht reinigbar.

Es ist auch eine Ausgestaltung, dass die Dampfauslassöffnung einen Überdruck von ca. 1 mbar bis ca. 5 mbar zulässt. Dieser Überdruck ermöglicht eine gute Befüllung des Dampfbehandlungseinsatzes mit Dampf und verändert ein Garverhalten im Vergleich zu einer drucklosen Dampfbeaufschlagung nicht.

Es ist eine alternative Ausgestaltung, dass die Dampfauslassöffnung einen Überdruck von bis zu ca. 1 bar zulässt. Dadurch kann ein Garablauf verkürzt werden und eine einem Schnellgaren ähnliche Funktion bereitgestellt werden.

Es ist eine Weiterbildung, dass das Ventilelement austauschbar ist und so beispielsweise ein Ventilelement für einen geringen Überdruck (z.B. von ca. 1 mbar bis ca. 5 mbar) gegen ein Ventilelement für einen höheren Druck (z.B. 1 bar) austauschbar ist, und umgekehrt.

Es ist noch eine Weiterbildung, dass der Dampfeinlassanschluss und die Dampfauslassöffnung verschließbar sind, z.B. durch passende Dichtelemente. So kann der Dampfbehandlungseinsatz auch als ein übliches Gargeschirr verwendet werden.

Es ist noch eine weitere Ausgestaltung, dass die Dampfauslassöffnung als ein Dampfauslassanschluss ausgebildet ist. Dadurch kann die Dampfauslassöffnung sicher mit einem Dampfabzugselement verbunden werden, z.B. einem Rohr oder einem Schlauch, wobei das Dampfabzugselement mit einem Dampfabfuhranschluss des Gargeräts verbunden werden kann. So ergibt sich der Vorteil, dass der Garraum nicht mit Dampf und damit nicht mit Feuchtigkeit beaufschlagt wird. Dadurch braucht der Garraum nicht aufwändig abgedichtet zu werden und braucht auch nicht vor Korrosion geschützt zu werden.

Die Aufgabe wird auch gelöst durch ein Gargerät wie in Anspruch 10 definiert, aufweisend einen Garraum, einen Dampferzeuger, mindestens einen mit dem Dampferzeuger verbundenen und von dem Garraum aus zugänglichen Dampfzufuhranschluss und eine Wrasenabzugseinrichtung. Das Gargerät weist ferner mindestens einen von dem Garraum aus zugänglichen Dampfabfuhranschluss auf, welcher mit der Wrasenabzugseinrichtung verbunden ist. Dadurch kann ein Dampfbehandlungseinsatz dampftechnisch vollständig über Rohre angeschlossen werden, so dass der Garraum nicht aufwändig abgedichtet oder vor Korrosion geschützt zu werden braucht. An den Dampfabfuhranschluss kann insbesondere ein Rohr, insbesondere Schlauch, angeschlossen werden, um einen Dampfauslassanschluss des Dampfbehandlungseinsatzes einfach anschließen zu können. Das Rohr ist zum einfachen Umstellen des Gargeräts auf einen normalen Backbetrieb abnehmbar. Durch die Verwendung eines Dampfbehandlungseinsatzes kann der Dampferzeuger bzgl. seiner Wassermenge und seiner Dampfleistung klein gehalten werden, da der Dampfgareinsatz ein im Vergleich zu dem Garraum kleines Volumen hat und damit die zu erzeugende Dampfmenge kleiner sein kann.

Es ist eine Ausgestaltung, dass der Dampfzufuhranschluss als ein in den Garraum ragendes Rohr ausgestaltet ist, was einen Anschluss des Dampfbehandlungseinsatzes erleichtert. Das Gargerät kann auch ohne einen Dampfbehandlungseinsatz unter Dampf betrieben werden.

Es ist noch eine Weiterbildung, dass der Dampferzeuger ein im Wesentlichen druckloser Dampferzeuger und/oder ein Dampfdruckerzeuger (z.B. für ein Schnelldampfgaren) ist. Es ist auch eine Weiterbildung, dass das Gargerät dazu eingerichtet ist, den Dampferzeuger wahlweise zwischen einem im Wesentlichen drucklosen Dampferzeugungsbetrieb und einem Dampfdruckerzeugungsbetrieb umzustellen.

Der Dampferzeuger kann innerhalb oder außerhalb des Garraums angeordnet sein.

Die Aufgabe wird ferner gelöst durch ein System wie in Anspruch 8 definiert, mit einem Gargerät wie oben beschrieben und mit mindestens einem Dampfbehandlungseinsatz, bei dem die Dampfauslassöffnung als ein Dampfauslassanschluss ausgebildet ist. Der mindestens eine Dampfbehandlungseinsatz ist in den Garraum des Gargeräts eingesetzt und der Dampfeinlassanschluss des mindestens einen Dampfbehandlungseinsatzes ist lösbar an einen jeweiligen Dampfzufuhranschluss des Gargeräts angeschlossen. Ferner ist der Dampfauslassanschluss des mindestens einen Dampfbehandlungseinsatzes lösbar an einen jeweiligen Dampfabfuhranschluss des Gargeräts angeschlossen. So ergeben sich die bereits dargelegten Vorteile.

Es ist eine Ausgestaltung, dass der Dampfauslassanschluss über ein Rohr, insbesondere Schlauch, an den Dampfabfuhranschluss angeschlossen ist.

In der folgenden Figur wird die Erfindung anhand eines Ausführungsbeispiels schematisch genauer beschrieben.

Die Fig. zeigt ein System 1, 3 aus einem Gargerät 1 in Form eines Backofens mit Dampfgarfunktion und eines in einen Garraum 2 des Gargeräts 1 eingesetzten Dampfbehandlungseinsatzes 3. Der Dampfbehandlungseinsatz 3 ist beispielsweise auf einem dampfdurchlässigen Gitterrost 4 abgelegt und auf diesem im Wesentlichen frei positionierbar.

Das Gargerät 1 weist außerhalb des Garraums 2 einen Dampferzeuger 5 auf, welcher mittels eines Wasserreservoirs 6 mit Wasser W befüllbar ist und dazu eingerichtet ist, das in ihm befindliche Wasser W in Dampf umzuwandeln. Der so erzeugte Dampf wird über eine Dampfzufuhrleitung 7, welche bis in den Garraum 2 ragt, zu einem Dampfzufuhranschluss 8 geleitet. An einer Oberseite des Garraums 2 bzw. eines zusammen mit einer Tür 9 den Garraum 2 begrenzenden Ofenmuffel 10 oder Backrohr ist eine Öffnung 11 eingebracht, an welcher eine Abzugseinrichtung 12 ansetzt. Die Abzugseinrichtung 12 umfasst z.B. ein Gebläse (o.Abb.) und saugt Luft, einschließlich Wrasen und Wasserdampf o.ä., aus dem Garraum 2 und fördert die Luft nach Außen.

Das Gargerät 1 weist ferner mindestens eine Unterhitzeheizung 19 oder Unterhitzeheizkörper auf. Der Betrieb des Gargeräts 1 ist insbesondere mittels einer Steuereinrichtung 13 steuerbar.

Der Dampfbehandlungseinsatz 3 weist ein Bodenteil 14 und einen dampfdicht auf das Bodenteil 14 aufsetzbaren Deckel 15 auf. In einer hier rückwärtig angeordneten Seitenwand des Bodenteils 14 befindet sich ein Dampfeinlassanschluss 16, welcher für eine dampfdichte Verbindung mit dem Dampfzufuhranschluss 8 ausgebildet ist.

Auf einer dem Dampfeinlassanschluss 16 gegenüberliegenden Seitenwand des Bodenteils 14 befindet sich ein Dampfauslassanschluss 17. Der Dampfauslassanschluss 17 dient als Dampfauslassöffnung für in dem Dampfbehandlungseinsatz 3 befindlichen Dampf und weist als ein von einem Nutzer austauschbares Teil ein Überdruckventil 18 auf, welches z.B. eine federnd gelagerte Andruckklappe (o.Abb.) aufweisen kann. Das Überdruckventil 18 lässt beispielsweise einen Überdruck von ca. 1 mbar bis ca. 5 mbar zu. Das Überdruckventil 18 ist beispielsweise gegen ein erst bei höheren Drücken, z.B. 1 bar, öffnendes Überdruckventil austauschbar, um ein Schnelldampfgaren zu ermöglichen. Das Überdruckventil 18 kann ferner gegen ein Abdichtelement zum dampfdichten Abdichten des Dampfauslassanschlusses 17 ausgetauscht werden oder auch ganz weggelassen werden.

Der Dampfauslassanschluss 17 kann frei bleiben, so dass von dem Dampferzeuger 5 im Wesentlichen drucklos oder druckbeaufschlagt über den Dampfzufuhranschluss 8 und den Dampfeinlassanschluss 16 in den Dampfbehandlungseinsatz 3 gelangender Dampf nach Durchströmen der gesamten Länge des Dampfbehandlungseinsatzes 3 aus dem Dampfauslassanschluss 17 in den Garraum 2 gelangt. Aus dem Garraum 2 ist der Dampf 2 mittels der Abzugseinrichtung 12 durch die Öffnung 11 abziehbar und nach Außen leitbar. Um eine Kondensation des Dampfs in dem Dampfbehandlungseinsatz 3 und/oder in dem Garraum 2 zu verhindern und um ggf. dem in dem Dampfbehandlungseinsatz 3 befindlichen Gargut G Wärme zuzuführen, kann die Unterhitzeheizung 19 aktiviert werden.

Um zu verhindern, dass Dampf in den Garraum 2 gelangt, kann der Dampfauslassanschluss 17 mit der Öffnung 11 verbunden werden, insbesondere mittels eines rohrförmigen Verbindungsstücks 20. Dadurch mag die Ofenmuffel 10 preiswerter, weil weniger korrosionsfest, ausgeführt werden. Ferner kann so bei einem Dampfgaren Energie gespart werden. Die Öffnung 11 ist dazu als ein Anschluss ausgestaltet, und das Verbindungsstück 20 weist an seinen beiden Enden passende Anschlusselemente, z.B. Kupplungen auf. Das Verbindungsstück 20 kann beispielsweise ein Schlauch sein.

Selbstverständlich ist die vorliegende Erfindung nicht auf das gezeigte Ausführungsbeispiel beschränkt.

Das Gargerät 1 kann beispielsweise ein Backofen oder ein Mikrowellengerät mit einer Dampfgarfunktionalität sein.

Um eine Kondensation des Dampfs in dem Dampfbehandlungseinsatz zu verhindern, mag der Dampfbehandlungseinsatz aktiv heizbar sein, z.B. mittels einer dem Dampfbehandlungseinsatz zugehörigen Heizung, wobei der Dampfbehandlungseinsatz dann zusätzlich noch einen elektrischen Anschluss zum Anschluss an einen passenden Gegenanschluss des Gargeräts 1 aufweist.

### Bezugszeichenliste

- 1: Gargerät
- 2: Garraum
- 3: Dampfbehandlungseinsatz
- 4: Gitterrost
- 5: Dampferzeuger
- 6: Wasserreservoir
- 7: Dampfzufuhrleitung
- 8: Dampfzufuhranschluss
- 9: Tür
- 10: Ofenmuffel
- 11: Öffnung
- 12: Abzugseinrichtung
- 13: Steuereinrichtung
- 14: Bodenteil
- 15: Deckel
- 16: Dampfeinlassanschluss
- 17: Dampfauslassanschluss
- 18: Überdruckventil
- 19: Unterhitzeheizung
- 20: Verbindungsstück
- G: Gargut
- W: Wasser

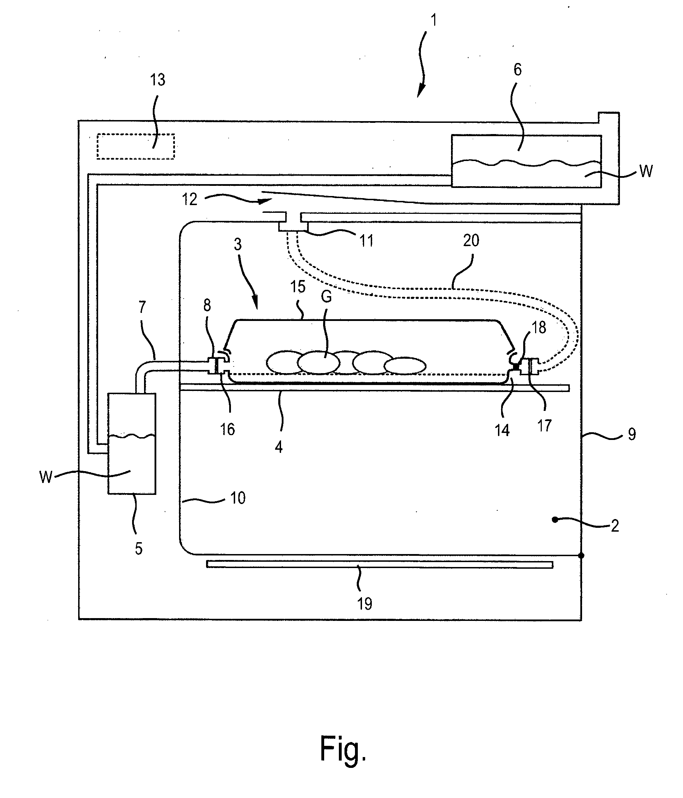

## Patentansprüche

1. Dampfbehandlungseinsatz (3) für ein Gargerät (1), aufweisend ein Bodenteil (14), einen dampfdicht auf das Bodenteil (14) aufsetzbaren Deckel (15), einen Dampfeinlassanschluss (16), und eine von dem Dampfeinlassanschluss (16) beabstandete Dampfauslassöffnung (17),
**dadurch gekennzeichnet, dass**
die Dampfauslassöffnung (17) ein Überdruckventil (18) aufweist.

2. Dampfbehandlungseinsatz (3) nach Anspruch 1, **dadurch gekennzeichnet, dass** der Dampfeinlassanschluss (16) und die Dampfauslassöffnung (17) an gegenüberliegenden Seiten des Dampfbehandlungseinsatzes (3) angeordnet sind.

3. Dampfbehandlungseinsatz (3) nach einem der vorhergehenden Ansprüche, **dadurch gekennzeichnet, dass** das Überdruckventil (18) austauschbar ist.

4. Dampfbehandlungseinsatz (3) nach Anspruch 3, **dadurch gekennzeichnet, dass** die Dampfauslassöffnung (17) eine federnd gelagerte Andruckklappe aufweist.

5. Dampfbehandlungseinsatz (3) nach Anspruch 4, **dadurch gekennzeichnet, dass** die Dampfauslassöffnung (17) einen Überdruck von ca. 1 mbar bis ca. 5 mbar zulässt.

6. Dampfbehandlungseinsatz (3) nach Anspruch 3, **dadurch gekennzeichnet, dass** die Dampfauslassöffnung (17) einen Überdruck von ca. 1 bar zulässt.

7. Dampfbehandlungseinsatz (3) nach einem der vorhergehenden Ansprüche, **dadurch gekennzeichnet, dass** die Dampfauslassöffnung (17) als ein Dampfauslassanschluss ausgebildet ist.

8. System (1, 3) mit mindestens einem Dampfbehandlungseinsatz (3) sowie mit einem Gargerät (1), aufweisend einen Garraum (2), einen Dampferzeuger (5), mindestens einen mit dem Dampferzeuger (5) verbundenen und von dem Garraum (2) aus zugänglichen Dampfzufuhranschluss (8) und eine Abzugseinrichtung (12), wobei das Gargerät (1) ferner mindestens einen von dem Garraum (2) aus zugänglichen Dampfabfuhranschluss (11) aufweist, welcher mit der Abzugseinrichtung (12) verbunden ist, wobei mindestens ein Dampfbehandlungseinsatz (3) in den Garraum (2) des Gargeräts (1) eingesetzt ist und der Dampfeinlassanschluss (16) des mindestens einen Dampfbehandlungseinsatzes (3) lösbar an einen jeweiligen Dampfzufuhranschluss (8) des Gargeräts (1) angeschlossen ist und der Dampfauslassanschluss (17) des mindestens einen Dampfbehandlungseinsatzes (3) lösbar an einen jeweiligen Dampfabfuhranschluss (11) des Gargeräts (1) angeschlossen ist,
**dadurch gekennzeichnet, dass**
der Dampfbehandlungseinsatz (3) ein Dampfbehandlungseinsatz (3) nach Anspruch 7 ist.

9. System (1, 3) nach Anspruch 8, **dadurch gekennzeichnet, dass** der Dampfauslassanschluss (17) über ein Rohr, insbesondere Schlauch (20), an den Dampfabfuhranschluss (11) angeschlossen ist.

10. Gargerät (1) nach einem der Ansprüche 8 oder 9, **dadurch gekennzeichnet, dass** der Dampfzufuhranschluss (8) als ein in den Garraum ragendes Rohr ausgestaltet ist.

## Claims

1. Steam cabinet (3) for a cooking appliance (1), said steam cabinet having a base part (14), a cover (15) mountable in a steam-tight manner on the base part (14), a steam inlet connection (16), and a steam outlet opening (17) placed at a distance from the steam inlet connection (16).
**characterised in that**
the steam outlet opening (17) has a pressure-relief valve (18).

2. Steam cabinet (3) according to claim 1, **characterised in that** the steam inlet connection (16) and the steam outlet opening (17) are arranged at opposite sides of the steam cabinet (3).

3. Steam cabinet (3) according to one of the preceding claims, **characterised in that** the pressure-relief valve (18) is exchangeable.

4. Steam cabinet (3) according to claim 3, **characterised in that** the steam outlet opening (17) has a spring-loaded flap valve.

5. Steam cabinet (3) according to claim 4, **characterised in that** the steam outlet opening (17) permits an overpressure of approximately 1 mbar up to approximately 5 mbar.

6. Steam cabinet (3) according to claim 3, **characterised in that** the steam outlet opening (17) permits an overpressure of approximately 1 bar.

7. Steam cabinet (3) according to one of the preceding claims, **characterised in that** the steam outlet opening (17) is designed as a steam outlet connection.

8. System (1, 3) with at least one steam cabinet (3) and with a cooking appliance (1) having a cooking compartment (2), a steam generator (5), at least one steam supply connection (8) connected to the steam generator (5) and accessible from the cooking compartment (2) and an extraction device (12), wherein the cooking appliance (1) also has at least one steam removal connection (11) accessible from the cooking compartment (2), said steam removal connection being connected to the extraction device (12), at least one steam cabinet (3) being inserted into the cooking compartment (2) of the cooking appliance (1) and the steam inlet connection (16) of the at least one steam cabinet (3) being detachably connected to a respective steam supply connection (8) of the cooking appliance (1) and the steam outlet connection (17) of the at least one steam cabinet (3) being detachably connected to a respective steam removal connection (11) of the cooking appliance (1),
**characterised in that**
the steam cabinet (3) is a steam cabinet (3) according to claim 7.

9. System (1, 3) according to claim 8, **characterised in that** the steam outlet connection (17) is connected via a pipe, in particular a hose (20), to the steam removal connection (11).

10. Cooking appliance (1) according to one of claims 8 or 9, **characterised in that** the steam supply connection (8) is configured as a pipe projecting into the cooking compartment.

## Revendications

1. Insert de traitement à la vapeur (3) pour un appareil de cuisson (1), présentant une portion de sol (14), un couvercle (15) pouvant être déposé de manière étanche à la vapeur sur la portion de sol (14), un raccordement d'entrée de la vapeur (16) et un orifice de sortie de la vapeur (17) distant du raccordement d'entrée de la vapeur (16), **caractérisé en ce que** l'orifice de sortie de la vapeur (17) présente une soupape de surpression (18).

2. Insert de traitement à la vapeur (3) selon la revendication 1, **caractérisé en ce que** le raccordement d'entrée de la vapeur (16) et l'orifice de sortie de la vapeur (17) sont disposés sur des côtés opposés de l'insert de traitement à la vapeur (3).

3. Insert de traitement à la vapeur (3) selon l'une des revendications précédentes, **caractérisé en ce que** la soupape de surpression (18) est remplaçable.

4. Insert de traitement à la vapeur (3) selon la revendication 3, **caractérisé en ce que** l'orifice de sortie de la vapeur (17) présente un clapet de pression monté sur ressorts.

5. Insert de traitement à la vapeur (3) selon la revendication 4, **caractérisé en ce que** l'orifice de sortie de la vapeur (17) autorise une surpression d'environ 1 mbar à environ 5 mbar.

6. Insert de traitement à la vapeur (3) selon la revendication 3, **caractérisé en ce que** l'orifice de sortie de la vapeur (17) autorise une surpression d'environ 1 bar.

7. Insert de traitement à la vapeur (3) selon l'une des revendications précédentes, **caractérisé en ce que** l'orifice de sortie de la vapeur (17) est exécuté sous forme de raccordement de sortie de la vapeur.

8. Système (1, 3) avec au moins un insert de traitement à la vapeur (3) et un appareil de cuisson (1), présentant un espace de cuisson (2), un générateur de vapeur (5), au moins un raccordement d'alimentation en vapeur (8) relié au générateur de vapeur (5) et accessible au départ de l'espace de cuisson (2) et un dispositif d'extraction (12), dans lequel l'appareil de cuisson (1) présente en outre au moins un raccordement d'évacuation de vapeur (11) accessible au départ de l'espace de cuisson (2), lequel est relié au dispositif d'extraction (12), dans lequel au moins un insert de traitement à la vapeur (3) est installé dans l'espace de cuisson (2) de l'appareil de cuisson (1) et le raccordement d'entrée de vapeur (16) de l'au moins un insert de traitement de la vapeur (3) est raccordé de manière amovible à un raccordement d'alimentation en vapeur (8) respectif de l'appareil de cuisson (1) et le raccordement de sortie de la vapeur (17) de l'au moins un insert de traitement de la vapeur (3) est raccordé de manière amovible à un raccordement d'évacuation de vapeur (11) respectif de l'appareil de cuisson (1), **caractérisé en ce que** l'insert de traitement de la vapeur (3) est un insert de traitement de la vapeur (3) selon la revendication 7.

9. Système (1, 3) selon la revendication 8, **caractérisé en ce que** le raccordement de sortie de la vapeur (17) est raccordé au raccordement d'évacuation de vapeur (11) via un tuyau, en particulier un flexible (20).

10. Appareil de cuisson (1) selon l'une des revendications 8 ou 9, **caractérisé en ce que** le raccordement d'alimentation en vapeur (8) est exécuté sous la forme d'un tuyau faisant saillie dans l'espace de cuisson.
